# EUROPEAN PATENT APPLICATION

(11) **EP 4 530 908 A1**
(43) Date of publication of application: **02.04.2025**
(21) Application number: 23465542.1
(22) Date of filing: 26.09.2023
(51) Int. Cl.: G06F 21/62, H04L 9/40, H04L 67/10, H04N 21/254, H04N 21/83

(54) **METHOD AND SYSTEM FOR GENERATING RULES FOR DATA ACCESS CONTROL**

(71) Applicant: Siemens Aktiengesellschaft, 80333 München (DE)
(72) Inventor: COMAN, Andrei Laurentiu, 500256 Brasov, Brasov (RO); TINTOIU, Anca Mihaela, 117630 Rucar, Arges (RO); KOVACS, Yvonne, 505600 Sacele (RO); CATARON, Angel Doru, 500133 Brasov, Brasov (RO)
(74) Representative: Fierascu, Cosmina-Catrinel

(57) **Abstract**

A method of generating an ODRL rule for controlling a device, a method of data access control, a system, a computer program and a computer-readable storage medium are disclosed. The first method includes: receiving a policy ontology; receiving a data asset information and at least one parameter; generating the ODRL rule for controlling the device based on the policy ontology, the data asset information and the at least one parameter from the device. The second method includes: generating a first ODRL rule, based on a first data asset information and at least one first parameter provided by a data producer device; sending the first ODRL rule to the data producer device; generating a second ODRL rule, based on a second data asset information and at least one second parameter provided by a data consumer device; sending the second ODRL rule to the data consumer device; receiving a aggregated specification based on the first ODRL rule and the second ODRL rule from the data producer device, and adding the aggregated specification to a distributed blockchain.

## Description

The invention relates to methods and systems for generating rules for enforcement of data access technical specification between data producer devices and data consumer devices.

In recent years, the number of connected devices has increased dramatically. With the rise of software applications involving loT objects and the growing demand for high volumes of collected and processed information, the necessity to share and manage data at scale increased accordingly.

This, in turn, comes with high complexity and therefore high maintenance costs and effort, which leads to longer adoption time for improved interoperability. Standardization of the data-sharing protocols partially solves these points.

Many data-sharing protocols usually rely on rules (so called policies) attached to the data itself. However, these policies are quite rigid and are not highly scalable when it comes to the exponential growth of the number of datasets. This is further exacerbated by the fact that they have low intrinsic automation, relying on human decision making.

ODRL (Open Digital Rights Language) is a standardized format used for expressing policies in the context of digital rights. This allows the creation of permissions, obligations, and constraints in a machine-readable language, making it possible to implement policies that can adapt to ongoing changes given the circumstances.

Article "Making the semantics of ODRL and URM explicit using web ontologies" (Kirrane S., Kasten A., Lewis D.; expressly incorporated herein by reference in its entirety) proposes a framework for making the semantics of Open Digital Rights Language (ODRL) and Usage Rights Markup (URM) explicit by using web ontologies. With this article the authors provided formal semantics based on web ontologies that could be used for automatically interpreting an ODRL license, however this solution does not cover the automatic generation of dynamic policies.

The possibility of applying ODRL framework on different use cases has been described in article "ODRL policy modelling and compliance checking: A survey. Journal of Ambient Intelligence and Humanized Computing" (Afzal M. T., Malik M. I., Bukhari S. A. C.; expressly incorporated herein by reference in its entirety) The article covers several approaches of policy modelling such as natural language, formal language, ontologies, and policy compliance checking, such as rule-based approaches, semantic reasoning and model checking. The automatic generation of dynamic policies is not discussed in the article.

Patent application CN115495785A "Access control method and system based on block chain policy management" (expressly incorporated herein by reference in its entirety) describes an approach based on Blockchain and Smart Contracts to generate data transfer instruction according to data request and to judge whether the access control policy is met by a data request. The access control policy is configurable, but the automatic generation of the policy is not discussed.

The aim of the present invention is to provide a method and system automatic generation of dynamic rules for data access, such that the rules enable negotiation and enforcement of technical specifications between data producer devices and data consumer devices, and such that all interactions between data producer devices and data consumer devices are recorded in a decentralized, transparent and immutable way.

According to a first aspect of the present invention there is provided a method of generating an ODRL rule for controlling a device, comprising:
receiving a policy ontology,
receiving a data asset information and at least one parameter,
generating the ODRL rule for controlling the device based on the policy ontology, the data asset information and the at least one parameter from the device.

Generating the ODRL rule for controlling a device typically comprises processing the data asset information and additional parameters (such as usage restrictions, geographical restrictions, availability start date, availability end date, etc.), and transforming them into ODRL format using the policy ontology.

The technical device is then controlled by the generated ODRL rule.

Preferably, the step of generating the ODRL rule comprises executing a smart contract.

In a preferred embodiment, freely combinable with the previous ones, the method further comprises adding the data asset information, the at least one parameter and the generated ODRL rule to a distributed blockchain.

In a further aspect, the invention relates to a method of data access control, comprising:
generating a first ODRL rule according to any of the previous embodiments, based on a first data asset information and at least one first parameter provided by a data producer device,
sending the first ODRL rule to the data producer device,
generating a second ODRL rule according to any of the previous embodiments, based on a second data asset information and at least one second parameter provided by a data consumer device,
sending the second ODRL rule to the data consumer device,
receiving a aggregated specification based on the first ODRL rule and the second ODRL rule from the data producer device, and adding the aggregated specification to a distributed blockchain.

The data consumer device preferably comprises a connector which is a computer program executed on a computer hardware belonging to a party which is interested in obtaining the data. Alternatively, such connector may be executed on a virtual server or in a cloud environment.

The data producer device preferably comprises a connector which is a computer program executed on a computer hardware belonging to a party which is providing the data. Alternatively, such connector may be executed on a virtual server or in a cloud environment.

The steps of generating the first and the second ODRL rule are preferably performed by smart contracts in a distributed blockchain. Alternatively, such steps may be also executed on a computer, for example a physical server, a virtual server or in a cloud environment.

The aggregated specification (negotiation result) is provided by the data producer device after performing negotiation between the data consumer device and the data producer device. The negotiation preferably comprises a step of sending the first ODRL rule from the data consumer device to the data producer device and a step of executing a computer program by the data producer device which performs processing of the first ODRL rule and the second ODRL rule, and matching the constraints and restrictions of either side of the negotiation. The negotiation may be performed in a fully automatic way, or may require a human acceptance, depending on the data asset information and/or additional parameters. The result of negotiation may be either positive or negative and may comprise the aggregated technical specification with parameters and/or parameter ranges.

For example, if the first ODRL rule specified usage restrictions which are included in the usage restrictions in the second ODRL rule, the negotiation result may be positive. On the other hand, if some usage restrictions in the first ODRL rule are not included in the second ODRL rule, the negotiation result may be negative. Similarly, any other constraints and restrictions may be taken into account in the negotiation process.

Preferably, the method further comprises instructing the data consumer device to initiate data transfer based on the aggregated specification received from the data producer device.

More preferably, the method further comprises receiving a transfer status from the data consumer device, and adding the transfer status to a distributed blockchain.

The transfer status may be received not only from the data consumer device, but also from the data producer device. In such case, both statuses are preferably added to a distributed blockchain.

In a preferred embodiment, freely combinable with the previous ones, the first and/or second data asset information comprises a data asset address.

A data asset address is typically a URL (Uniform Resource Locator). It may be also any other unique identifier or a unique combination of identifiers. Other data asset information may include version, category, purpose, date and time of creation or modification, etc.

In yet another preferred embodiment, freely combinable with the previous ones, the at least one first and/or second parameter is one of: usage restrictions, geographical restrictions,, availability start date, availability end date, and/or any other kind of restriction.

### Examples of usage restrictions:

Transferable - Whether the Agreement can be transferred to another party
Exclusiveness - Whether the Dataset is to be used exclusively by the Consumer
Paid Upfront - Whether the Dataset was already paid for outside this Agreement Revocable - Whether the Offer can be revoked at any time
Processing - Whether the Dataset can be further processed by the Consumer
Modifying - Whether the Dataset can be modified by the Consumer
Analysing - Whether the Dataset can be further analysed by the Consumer
Reproducing - Whether the Dataset can be reproduced by the Consumer
Distributing - Whether the Dataset can be distributed by the Consumer to other parties
Loaning - Whether the Dataset can be loaned by the Consumer to other parties
Selling - Whether the Dataset can be sold by the Consumer to other parties
Renting - Whether the Dataset can be rented by the Consumer to other parties
Leasing - Whether the Dataset can be leased by the Consumer to other parties

### Examples of availability restrictions:

StartDate - The timestamp at which the Dataset will be made available by the Producer
EndDate - The timestamp until the Dataset is made available by the Producer

Examples of geographic restrictions: country, state, region, etc.

### Examples of other kinds of restrictions:

MinPrice - The minimum price the Producer is willing to accept for the Dataset
MaxPrice - The maximum price the Producer is willing to accept for the Dataset
DueDate - The Date at which the Payment is due
Currency - The accepted currency by the Producer for the transaction.

In a further aspect, the invention relates to a system for generating an ODRL rule for controlling a device, comprising:
means for receiving a policy ontology,
means for receiving a data asset information and at least one parameter from the device,
processing means for generating the ODRL rule for controlling the device based on the policy ontology, the data asset information and the at least one parameter.

Preferably, means for generating the ODRL rule comprises a smart contract.

In a preferred embodiment, freely combinable with the previous ones, the system further comprises means for adding the data asset information, the at least one parameter and the generated ODRL rule to a distributed blockchain.

In a further aspect, the invention relates to a system for data access control, comprising:
a first system for generating a first ODRL rule according to any of the previous embodiments, based on data asset information and at least one parameter provided by a data producer device,
means for sending the first ODRL rule to the data producer device,
a second system for generating a second ODRL rule according to any of the previous embodiments, based on data asset information and at least one parameter provided by a data consumer device,
means for sending the second ODRL policy to the data consumer device,
means for receiving a aggregated specification based on the first ODRL rule and the second ODRL rule from the data producer device, and means for adding the aggregated specification to a distributed blockchain.

The data consumer device preferably comprises a connector which is a computer program executed on a computer hardware belonging to a party which is interested in obtaining the data. Alternatively, such connector may be executed on a virtual server or in a cloud environment.

The data producer device preferably comprises a connector which is a computer program executed on a computer hardware belonging to a party which is providing the data. Alternatively, such connector may be executed on a virtual server or in a cloud environment.

The first and the second system may comprise the same or separate computer, for example a physical server, a virtual server, or in a cloud environment. Preferably the first and the second system comprise smart contracts in a distributed blockchain.

The aggregated specification (negotiation result) is provided by the data producer after performing negotiation between the data consumer device and the data producer device. The negotiation preferably comprises a step of sending the first ODRL rule from the data consumer device to the data producer device and a step of executing a computer program by the data producer device which performs processing of the first ODRL rule and the second ODRL rule, and matching the constraints and restrictions of either side of the negotiation. The negotiation may be performed in a fully automatic way, or may require a human acceptance, depending on the data asset information and/or additional parameters. The result of negotiation may be either positive or negative and may comprise the aggregated technical specification with parameters and/or parameter ranges.

Preferably, the system further comprises:
means for instructing the data consumer device to initiate data transfer based on the aggregated specification received from the data producer device,

More preferably, the system further comprises means for receiving a transfer status from the data producer device and/or data consumer device,

Even more preferably, the system further comprises means for adding the transfer status to a distributed blockchain.

In a further aspect, the invention relates to a computer program product comprising instructions which, when the program is executed by a computer, cause the computer to carry out the method of any of the previous embodiments.

In a yet further aspect, the invention related to a computer-readable storage medium comprising instructions which, when executed by a computer, cause the computer to carry out the method of any of the previous embodiments.

Further features of the present invention will be apparent from the following description of exemplary embodiments with reference to the attached drawings.
Fig. 1 is a flowchart illustrating the method of generating an ODRL rule for a data asset by a Contract Manager, according to one embodiment of the invention
Fig. 2 is a flowchart illustrating the method of data access control, according to one embodiment of the invention
Fig. 3 is a block diagram illustrating the logical components of a system for generating an ODRL rule for a data asset according to one embodiment of the invention
Fig. 4 is a block diagram illustrating the logical components of a system for generating an ODRL rule for a data asset according to another embodiment of the invention
Fig. 5 is a block diagram illustrating the logical components of a system for data access control
Fig. 6 is a block diagram illustrating the hardware components of a computer being part of the system according to one embodiment of the invention

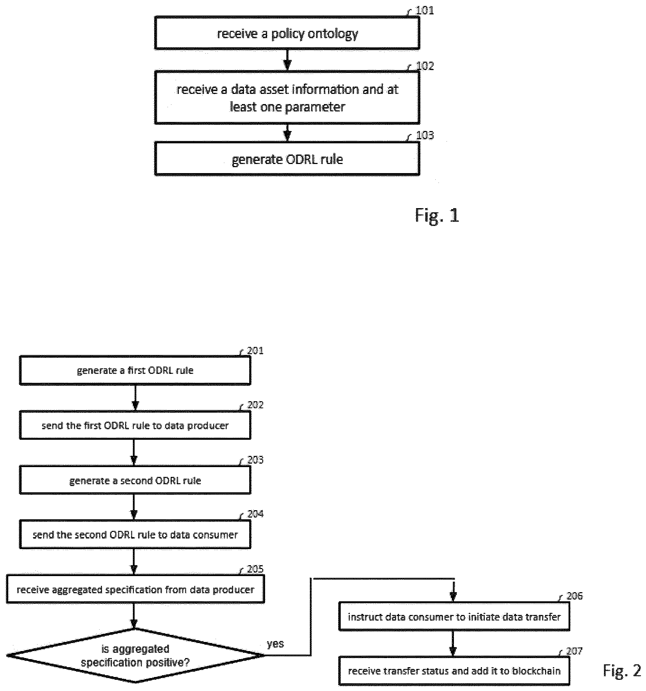

As presented in Fig. 1, a method of generating an ODRL rule (otherwise called ODRL policy) for a data asset starts with step 101, where a Smart Contract Manager (SCM) receives a policy ontology. SCM is a central component of a system according to the invention and provides means to interact with the Smart Contracts, which are deployed on a distributed blockchain. A policy ontology is typically provided upon deployment or during configuration of the SCM. In step 102, the SCM receives a request from either a data producer or data consumer, the request comprising a data asset information and a list of parameters. Data producer and data consumer are technical devices comprising connectors allowing them to communicate with SCM. In step 103, the SCM invokes Policy Generator Smart Contract that runs on the blockchain. This Smart Contract provides functionality for creating and managing ODRL policies. SCM creates a new transaction and sends it to the Smart Contract, together with the data asset information, the list of parameters and the policy ontology. Once the transaction is received, the Create ODRL Policy function is executed. If certain conditions are met and the function is successfully executed, the generated ODRL policy is returned to the Smart Contract Manager and then to the requesting party (data producer or data consumer). As a result, the technical device is controlled by the generated ODRL rule. The transaction is recorded on the blockchain in a decentralized, transparent way that prevents modifying such transaction in a later time.

Fig. 2 illustrates a method of data access control according to one embodiment of the invention. In step 201, a Smart Contract Manager (SCM) generates a first ODRL rule based on a request from a data producer and sends the first ODRL rule to the data producer. In step 202, the SCM generates a second ODRL rule based on a request from a data consumer and sends the second ODRL rule to the data consumer. Both steps 201 and 202 are performed according to the embodiment presented in Fig. 1. Once both data producer and data consumer have their ODRL policies, the contract negotiation can commence. In step 203, the data consumer sends the first ODRL rule to the data producer. Then, in step 204, the data producer performs processing of the first ODRL rule and the second ODRL rule, by matching the constraints and restrictions of either side of the negotiation. The negotiation may be performed in a fully automatic way, or may require a human acceptance, depending on the data asset information and/or additional parameters. In step 205, the data producer notifies the SCM of the aggregated specification (negotiation result), which may be either positive or negative and may comprise the aggregated technical specification with parameters and/or parameter ranges. The SCM adds the aggregated specification to the blockchain.

If the negotiation result is negative, no further steps are executed. In case of positive negotiation result, the method continues in step 206, where the SCM instructs the data consumer to initiate data transfer. In step 207, the data consumer and/or the data consumer provides the transfer status to the SCM, and SCM adds the transfer status to the blockchain. Step 207 is executed at least once by the data consumer, when the data transfer is completed. It may be also executed additionally at any time during the data transfer by either data consumer or data producer, informing about the progress of data transfer. In the case of data transfer failure, any known non-repudiation mechanism can be used.

As a result, a machine-to-machine communication scalability between the data producer device and the data consumer device is improved. Without human intervention the negotiation and enforcement of technical specification is more efficient.

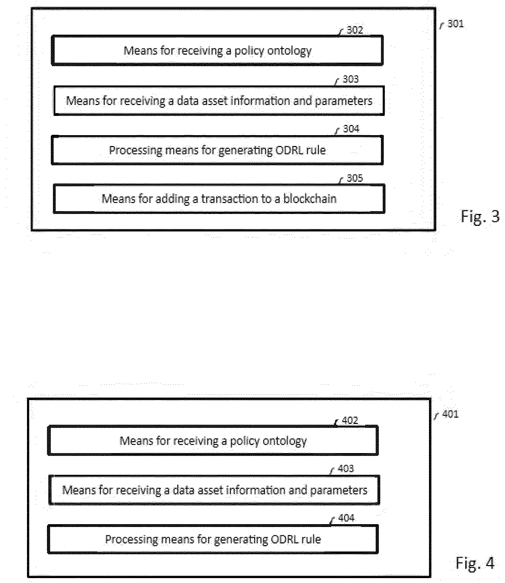

Fig. 3 presents logical components of a system for generating an ODRL rule (otherwise called ODRL policy) for a data asset according to one embodiment of the invention. The system 301 includes means 302 for receiving a policy ontology, means 303 for receiving a data asset information and a list of parameters, processing means 304 for generating the ODRL rule and means 305 for adding a transaction to a distributed blockchain.

Means 302 is used for receiving a policy ontology. The policy ontology may be received from a network interface, read from a file stored in a computer storage or entered by a user.

Means 303 is used for receiving a data asset information and a list of parameters from a data producer or from a data consumer, via a network interface.

Means 304 is used for generating the ODRL rule and comprises a smart contract executed on a distributed blockchain. The smart contract processes the data asset information and the list of parameters and transforms them into ODRL format using the policy ontology.

Means 305 is used for adding a transaction to a distributed blockchain. The transaction includes the data asset information, the list of parameters and ODRL rule generated by means 304.

Fig. 4 presents logical components of a system for generating an ODRL rule (otherwise called ODRL policy) for a data asset according to another embodiment of the invention. The system 401 includes means 402 for receiving a policy ontology, means 403 for receiving a data asset information and a list of parameters, and processing means 404 for generating the ODRL rule.

Means 402 is used for receiving a policy ontology. The policy ontology may be received from a network interface, read from a file stored in a computer storage or entered by a user.

Means 403 is used for receiving a data asset information and a list of parameters from a data producer or from a data consumer, via a network interface.

Means 404 is used for generating the ODRL rule and comprises a computer program executed on a physical server, a virtual server or in a cloud environment. The smart contract processes the data asset information and the list of parameters and transforms them into ODRL format using the policy ontology.

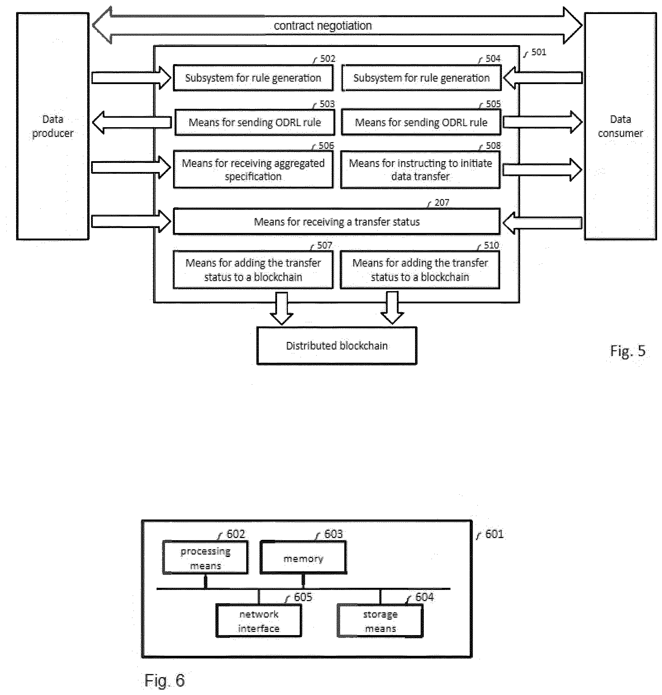

Fig. 5 illustrates logical components of a system for data access control. In one embodiment, the system 501 includes a first subsystem 502 for generating a first ODRL rule based on a request from a data producer, means 503 for sending the first ODRL rule to the data producer, a second subsystem 504 for generating a second ODRL rule based on a request from a data consumer, means 505 for sending the second ODRL rule to the data consumer, means 506 for receiving a aggregated specification, and means 507 for adding the aggregated specification to a distributed blockchain.

Subsystems 502 and 504 may be implemented according to one embodiment presented in fig. 3 or according to another embodiment presented in fig. 4. In either case, the generated ODRL rule is sent to the data producer and data consumer by respective means 503 and 505, via a network interface.

Means 506 is used to receive a aggregated specification from the data producer via a network interface. The contract negotiation is performed between data producer and data consumer, independently from system 501.

Means 507 is used for adding the aggregated specification received by means 506 to a distributed blockchain.

In another embodiment, the system 501 additionally comprises means 508 for instructing the data consumer to initiate data transfer. Instruction to initiate data transfer is sent to the data consumer via a network interface when the aggregated specification received by means 506 is positive.

In yet another embodiment, the system 501 additionally comprises means 509 for receiving a transfer status and means 510 for adding the transfer status to a distributed blockchain. The transfer status is received via a network interface from the data producer and/or data consumer.

Fig. 6 illustrates the hardware components of a computer being part of the system according to one embodiment of the invention. A computer 601, in the most general form includes a processing means 602, which typically is CPU and/or GPU, a memory 603, which is typically RAM, and a storage means 604, which is typically hard disk. It may also include network interface 605. Computer 601 may be a standalone PC, workstation, server, or a virtual server in a cloud environment.

Although particular embodiments have been disclosed herein in detail, they are done by way of example for purposes of illustration only, and is not intended to be limiting with respect to the scope of the appended claims that follow.

Independent of the grammatical term usage, individuals with male, female or other gender identities are included within the term.

## Claims

1. A method of generating an ODRL rule for controlling a device, comprising:
receiving a policy ontology,
receiving a data asset information and at least one parameter from the device,
generating the ODRL rule for controlling the device based on the policy ontology, the data asset information and the at least one parameter.

2. The method according to claim 1, wherein the step of generating the ODRL rule comprises executing a smart contract.

3. The method according to claim 1 or 2, further comprising adding the data asset information, the at least one parameter and the generated ODRL rule to a distributed blockchain.

4. A method of data access control, comprising:
generating a first ODRL rule according to any of the claims 1-3, based on a first data asset information and at least one first parameter provided by a data producer device,
sending the first ODRL rule to the data producer device,
generating a second ODRL rule according to any of the claims 1-3, based on a second data asset information and at least one second parameter provided by a data consumer device,
sending the second ODRL rule to the data consumer device,
receiving a aggregated specification based on the first ODRL rule and the second ODRL rule from the data producer device, and adding the aggregated specification to a distributed blockchain.

5. The method according to claim 4, further comprising instructing the data consumer device to initiate data transfer based on the aggregated specification received from the data producer device.

6. The method according to claim 5, further comprising receiving a transfer status from the data consumer device, and adding the transfer status to a distributed blockchain.

7. The method according to any preceding claim, wherein the first and/or second data asset information comprises a data asset address.

8. The method according to any preceding claim, wherein the at least one first and/or second parameter is one of: usage restrictions, geographical restrictions, availability start date, availability end date.

9. A system for generating an ODRL rule for controlling a device, comprising:
means for receiving a policy ontology,
means for receiving a data asset information and at least one parameter from the device,
processing means for generating the ODRL rule for controlling the device based on the policy ontology, the data asset information and the at least one parameter.

10. The system according to claim 9, wherein means for generating the ODRL rule comprises a smart contract.

11. The system according to claim 9 or 10, further comprising means for adding the data asset information, the at least one parameter and the generated ODRL rule to a distributed blockchain.

12. A system for data access control, comprising:
a first system for generating a first ODRL rule according to any of the claims 9-11, based on data asset information and at least one parameter provided by a data producer device,
means for sending the first ODRL rule to the data producer device,
a second system for generating a second ODRL rule according to any of the claims 9-11, based on data asset information and at least one parameter provided by a data consumer device,
means for sending the second ODRL rule to the data consumer device,
means for receiving a aggregated specification based on the first ODRL rule and the second ODRL rule from the data producer device, and means for adding the aggregated specification to a distributed blockchain.

13. The system according to claim 12, further comprising:
means for instructing the data consumer device to initiate data transfer based on the aggregated specification received from the data producer device, and;
preferably, means for receiving a transfer status from the data producer device and/or data consumer device, and means for adding the transfer status to a distributed blockchain.

14. A computer program product comprising instructions which, when the program is executed by a computer, cause the computer to carry out the method of any of the claims 1-8

15. A computer-readable storage medium comprising instructions which, when executed by a computer, cause the computer to carry out the method of any of the claims 1-8.
